(19) Europäisches Patentamt
European Patent Office
Office européen des brevets

(11) Numéro de publication: **0 005 116**
**B1**

(12) **FASCICULE DE BREVET EUROPEEN**

(45) Date de publication du fascicule du brevet: **30.11.83**

(21) Numéro de dépôt: **79400251.9**

(22) Date de dépôt: **19.04.79**

(51) Int. Cl.[3]: **G 01 N 29/04,**
A 61 B 10/00, G 02 B 3/00

(54) **Procédé pour exploration d'une pièce par un faisceau.**

(30) Priorité: **20.04.78 FR 7811670**

(43) Date de publication de la demande:
**31.10.79 Bulletin 79/22**

(45) Mention de la délivrance du brevet:
**30.11.83 Bulletin 83/48**

(84) Etats contractants désignés:
**DE GB IT**

(56) Documents cités:
**FR - A - 2 298 921**
**GB - A - 1 395 932**
**US - A - 3 028 752**
**US - A - 3 699 805**

(73) Titulaire: **COMMISSARIAT A L'ENERGIE ATOMIQUE Etablissement de Caractère Scientifique Technique et Industriel**
**B.P. 510**
**F-75752 Paris Cedex 15 (FR)**

(72) Inventeur: **Perdijon, Jean**
**Chemin de Rosat**
**F-38330 Saint Ismier (FR)**

(74) Mandataire: **Mongrédien, André et al,**
**c/o BREVATOME 25, rue de Ponthieu**
**F-75008 Paris (FR)**

**EP 0 005 116 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

# Procédé pour l'exploration d'une pièce par un faisceau

La présente invention concerne un procédé pour l'exploration d'une pièce par un faisceau, notamment de type ultrasonore ou électromagnétique.

Cette invention s'applique plus particulièrement à l'exploration d'une pièce en profondeur, dans une direction normale à la surface de cette pièce. Elle permet d'examiner à un instant donné de l'exploration, une certaine épaisseur de pièces de formes diverses, avec un seul traducteur ultrasonore par exemple, dont la distance par rapport à la pièce est maintenue constants. Le traducteur ultrasonore doit alors être branché sur un appareil émetteur-récepteur d'ultrasons, de type CGR-R7 commercialisé par la Société CGR, ou de type KROUTKRAMER USIP 11 commercialisé par la Société KROUTKRAMER (FRANCE).

Dans les procédés d'exploration connus, pour avoir une bonne sensibilité, il est nécessaire que le concentration des ondes ultrasonores soit maximale au voisinage du point à examiner. C'est pour cette raison, que les faisceaux issus des traducteurs ultrasonores connus, sont généralement focalisés. On sait que, grâce à une faisceau focalisé, on peur explorer un segment situé notamment dans une pièce métallique, par exemple dans une zone voisine d'une soudure réalisée dans cette pièce. Cette exploration est souvent réalisée dans des pièces épaisses ou massives, selon des profondeurs variables; le faisceau doit alors être focalisé sur les différents points à examiner. Cette focalisation peur être obtenue par déplacement d'un seul traducteur. On sait que, avec un traducteur à focalisation sphérique, ce déplacement doit être effectué obliquement par rapport à la pièce métallique de façon à maintenir la tache focale du traducteur sur le segment à explorer. Dans le cas où l'exploration consiste à examiner une soudure entre deux pièces grâce à un faisceau ultrasonore, le plan de cette soudure est généralement perpendiculaire au dioptre formé par le milieu contenant la soudure et le milieu de couplage (eau par exemple), dans lequel est situé le traducteur. L'observation totale du plan de soudure se fait alors par déplacement du traducteur dans deux directions: un premier déplacement du traducteur parallèlement au plan de soudure et parallèlement à la surface séparant les deux milieux et un deuxième déplacement en altitude afin de modifier la profondeur de la tache focale du traducteur dans la pièce.

On sait également, pour examiner des pièces en profondeur et notamment dans une direction perpendiculaire à la surface de ces pièces, utiliser plusieurs traducteurs focalisants, dont les taches focales dand la pièce sont échelonnées à des profondeurs différentes. Ce procédé connu nécessite d'utiliser un grand nombre de traducteurs si l'on veut obtenir une exploration suffisante. Le principal inconvénient d'un tel montage résulte de la nécessité d'employer un grand nombre de traducteurs associés à des appareils électroniques, ce qui a pour conséquence de rendre ce montage très coûteux.

Les traducteurs focalisants qui sont généralement utilisés dans les deux types de procédés connus qui viennent d'être décrits, ont souvent une forme sphérique ou encore torique.

Comme on vient de le voir, les procédés d'exploration de pièces connues, nécessitent soit de déplacer le traducteur dans plusieurs directions, soit d'utiliser plusieurs traducteurs, ce qui est peur pratique et coûteux.

Un procédé connu qui nécessite le déplacement du traducteur est décrit dans le brevet GB—A—1 395 932. Ce procédé utilise un générateur d'ondes ultrasonores et des moyens de transmission de ces ondes, sous forme d'un faisceau à section annulaire, qui convergent le long d'une ligne de focalisation, parallèle à la direction de propagation.

Le générateur est déplacé pour l'exploration d'une pièce.

Un procédé connu, utilisant plusieurs traducteur est décrit dans le brevet FR—A—2 298 921. Dans ce procédé, les tâches focales respectives des traducteurs focalisés à ultrasons, sont réparties sur toute l'épaisseur d'un matériau à contrôler.

La présente invention a pour but de remédier aux inconvénients des dispositifs connus mentionnés plus haut, et notamment de permettre l'exploration de pièces, en profondeur, sans qu'il soit nécessaire, soit de déplacer un traducteur dans plusieurs directions, soit d'utiliser plusieurs traducteurs.

L'invention concerne un procédé pour l'exploration d'une piéce par un faisceau, cette pièce n'étant une partie ni du corps humain ni du corps animal, le procédé consistant à utiliser une lentille dont une face plane reçoit le faisceau, caractérisé en ce que cette face plane est perpendiculaire à la caustique de la lentille dans la pièce, cette caustique étant obtenue par réfraction du faisceau issu de la lentille dans la pièce et étant concentrés sur une normale à la pièce, une autre face de la lentille située en regard de la pièce étant une surface gauche présentant le même axe que celui de la caustique.

Selon une autre caractéristique, la pièce étant plane, la face de la lentille en regard de la pièce est une surface conique.

Selong une autre caractéristique, la pièce étant sphérique, la face de la lentille en regard de la pièce, a une forme torique.

Selon une autre caractéristique, la surface de la pièce étant cylindrique, la face de la lentille en regard de la pièce présente une surface conique au voisinage du plan méridien de cette pièce contenant la caustique et une surface

torique au voisinage du plan équatorial ce cette pièce contenant la caustique, ces deux surfaces étant raccordées de manière continue et monotone.

Selon une autre caractéristique, la caustique est formée après au moins une réflexion du faisceau dans la pièce à la suite de la réfraction.

D'autres caractéristiques et avantages de l'invention ressortiront mieux de la description qui va suivre, donnée en référence aux dessins annexés dans lesquels:

— la figure 1 illustre d'une manière générale, une lentille utilisée dans le procédé de l'invention pour l'exploration d'une pièce par un faisceau. Conformément à l'invention, la constitution et la position de cette lentille par rapport à la pièce, sont telles que sa caustique dans la pièce, formée par réfraction du faisceau, est concentrée sur une normale à la pièce;

— la figure 2 illustre une lentille utilisée dans le procédé de l'invention, permettant l'exploration de pièces planes;

— la figure 3 représente une lentille correspondant à la figure précédente;

— la figure 4 illustre une lentille conforme à l'invention, permettant l'exploration de pièces sphériques;

— la figure 5 représente une lentille correspondant à la figure précédente;

— la figure 6a illustre une lentille conforme à l'invention permettant l'observation d'une pièce sphérique creuse, présentant deux faces parallèles;

— la figure 6b est une vue agrandie de la figure précédente, au voisinage de la pièce sphérique;

— la figure 7 illustre une lentille conforme à l'invention permettant l'exploration d'une piéce cylindrique;

— la figure 8 représente une lentille correspondant à la figure précédente;

— la figure 9 représente une optique conforme à l'invention constituée par une association de miroirs.

En référence à la figure 1, on a représenté d'une manière très schématique, une optique 1, d'exploration d'une pièce 2, par un faisceau 3. Conformément à l'invention, la constitution et la position de cette optique sont telles que sa caustique dans la pièce, représentée par le segment FG et formée après réfraction du faisceau, est concentrée sur une normale YY' à cette pièce. On supposera dans toute la suite de la description que le faisceau 3 est un faisceau ultrasonore dont les rayons dont parallèles à YY', et que l'optique 1 est une lentille dont la face qui reçoit le faisceau incident est plane et perpendiculaire à YY'; il est bien évident cependant, que tout ce qui va être décrit en relation avec un faisceau ultrasonore pourraît s'appliquer à un faisceau de type électromagnétique et que tout ce qui va être décrit en relation avec une lentille pourrait s'appliquer à une optique formée de une ou plusieurs lentilles et/ou miroirs. Pour des commodités de représentation, on a supposé que les normales à la pièce, le long de sa section par le plan de la figure, étaient toutes contenues dans ce plan, tout au moins au voisinage du point moyen d'incidence du faisceau sur la pièce; de plus on n'a pas montré sur la figure le traducteur ultrasonor permettant l'émission du faisceau 3 d'ondes ultrasonores ainsi que la réception des ondes réfléchies ou diffractées dans la pièce. Sur cette figure, on désigne par:

$C_1$: la vitesse ultrasonore dans la lentille 1;
$C_2$: la vitesse ultrasonore dans le milieu de couplage 6, entre la lentille 1 et la pièce 2. Ce milieu de couplage peut être de l'eau par exemple;
$C_3$: la vitesse ultrasonore dans la pièce 2;
$\gamma$: l'angle d'incidence du faisceau en provenance de la lentille, sur la caustique FG de la lentille dans la pièce;
p: la profondeur moyenne du segment FG;
d: la longueur du segment FG;
h: la hauteur moyenne du milieu de couplage;
A: le point moyen d'émergence du faisceau à la sortie de la lentille;
a, b: les coordonnées de A;
C: le centre de courbure de la face de la lentille par où émerge le faisceau;
u, v: les coordonnées de C;
$\rho$: le rayon de courbure AC;
D: la largeur minimale du faisceau incident sur la lentille;
H: le point moyen du segment FG;
M: le point moyen d'incidence du faisceau sur la pièce;
$\alpha$: l'angle d'incidence du faisceau au dioptre lentillemilieu de couplage;
$\beta$: l'angle de réfraction au dioptre lentille-milieu de couplage;
i: l'angle d'incidence au dioptre milieur de couplage-pièce;
r: l'angle de réfraction au dioptre milieu de couplage-pièce.

D'une manière générale, pour que le segment FG représente la caustiqie de l'optique dans la pièce, il est nécessaire que, dans toutes les sections de la pièce par les plans contenant FG, tout au moins au voisinage de l'axe ou faisceau dans la pièce, l'angle $\gamma$ qui représente l'incidence du faisceau réfracté sur le segment FG soit constant:

$$\gamma = \text{constante} \quad (1)$$

Il est nécessaire d'autre part que la loi de Descartes soit satisfaite pour les deux dioptres:

$$\sin i = (C_2/C_3) . \sin r \quad (2)$$
$$\sin \alpha = (C_1/C_2) . \sin \beta \quad (3)$$

d'où il est possible de déduire par différentiation:

$$d\gamma=0 \quad (4)$$

et

$$\cos i \, . \, d\, i=(C_2/C_3)\cos r \, . \, dr \quad (5)$$

En référence à la figure 2, on a représenté très schématiquement une lentille 4, conforme à l'invention, et permettant l'exploration d'une pièce plane 5. La constitution et la position de cette lentille sont telles que la caustique de la lentille dans la pièce, représentée par le segment FG, est concentrée au voisinage d'une normale OY à la surface OX de la pièce. Le faisceau 3 d'ultrasons incident sur la lentille est parallèle à la caustique dans la pièce et la face 32 de la lentille qui reçoit le faisceau incident est plane et perpendiculaire à OY.

En fonction de données et relations générales définies à propos de la figure 1, il est possible d'écrire:

$$\alpha-\beta=i \quad (6)$$

Il résulte des relations 3 et 6 que:

$$tg\alpha=\frac{\sin i}{\cos i-C_2/C_1} \quad (7)$$

et, d'autre part,

$$r=(\pi/2)-\gamma \quad (8)$$

Il est possible d'écrire à partie des relations 8 et 2:

$$\sin i=(C_2/C_3)\, . \cos \gamma \quad (9)$$

Les relations 9 et 7 permettent de calculer l'angle $\alpha$, d'incidence du faisceau sur le dioptre entre la lentille 4 et le milieu de couplage 6, qui est constant. Cet angle $\alpha$ étant constant, la section de la lentille représentée par la face 7 de la lentille en regard de la surface 8 de la pièce 5 dans le plan de la figure, est un segment de droite faisant l'angle $\alpha$ avec OX. Par symétrie de révolution autour de OY, on en déduit qui la surface de la lentille, en regard de la pièce, est conique.

Les coordonnées a, b, du point moyen A d'émergence du faisceau à la sortie de la lentille sont alors les suivantes:

$$a=p \text{ tg } r+h \sin i \quad (10)$$

$$b=h \cos i \quad (11)$$

La largeur D du faisceau peut alors s'exprimer par la relation:

$$D=\frac{\cos \alpha \, . \cos i \, . \, tg\, r}{\cos(\alpha-i)} \, . \, d \quad (12)$$

Si l'on prend par exemple une lentille en plexiglass, permettant l'exploration d'une pièce plane en acier grâce à un faisceau d'ultrasons et que le milieu de couplage choisi est de l'eau, la vitesse ultrasonore dans la lentille est:

$$C_1=2730 \text{ m/s}$$

La vitesse ultrasonore dans l'eau:

$$C_2=1483 \text{ m/s et}$$

La vitesse ultrasonore $C_3$ dans la pièce=3230 m/s (ondes transversales).

Si l'on choisit alors l'angle d'incidence du faisceau ultrasonore sur la caustique FG: $\alpha$=15° et que l'on prenne:

- pour profondeur moyenne d'exploration: p=6,9 mm,
- pour longueur du segment FG: d=4,6 mm,
- pour hauteur d'eau moyenne: h=22,3 mm,

on peur déduire à partie des relations précédentes:

r=75°
i=26,3°
$\alpha$=51,5°
a=35,6 mm
b=20 mm
D=10,6 mm.

En référence à la figure 3, on a représenté une lentille 4 correspondant à la figure précédente. Cette lentille, qui permet l'exploration d'une pièce plane, a une face plane 32 qui reçoit le faisceau ultrasonore incident, tandis que sa face 7 située en regard de la pièce, est une surface gauche qui, dans le cas particulier de l'exploration d'une pièce plane a une forme conique. Cette forme conique est obtenue par intersection d'un cylindre de diamètre D, avec un cône d'axe YY' et de demi-angle au sommet

$$S=\frac{\pi}{2}-\alpha$$

Bien entendu, le diamètre D du cylindre ayant servi à l'élaboration de la lentille est au moins égal à la largeur D calculée précédemment. L'axe ZZ' du cylindre est bien entendu parallèle au faisceau ultrasonore que reçoit la lentille sur sa face 32. Cet axe doit être disposé perpendiculairement à la pièce plane et le point A, intersection de ZZ' avec la face 7 doit avoir a et b pour coordonnées par rapport à la pièce et à YY', a et b étant donnés par les relations 10 et 11.

En référence à la figure 4, on a représenté une lentille 9, permettant l'exploration d'une pièce sphérique 10, par un faisceau 3, ultrasonore par exemple. La constitution et la position de cette lentille par rapport à la pièce sphérique 10 sont telles que la caustique FG de

cette optique dans la pièce est concentrée sur une normal OY à cette pièce. Le faisceau 3 d'ultrasons incident sur la lentille est parallèle à la caustique dans la pièce et la face 14 de la lentille qui reçoit le faisceau incident est plane et perpendiculaire à OY. Le point O représente le centre de la sphère 10 de rayon R. Langle $\omega$ que fait le rayon moyen issu du point moyen A de la lentille, aved OY, est tel que:

$$\omega=\alpha-\beta$$

Si $\theta$ désigne l'angle que fait avec OY la normale à la sphère, au point M, c'est-à-dire le rayon OL de la sphère passant par M, on a également:

$$\omega=i+\theta \text{ et } r=(\pi/2)-\gamma-\theta$$

On peur déterminer par un calcul différentiel simple, quel doit être le rayon de courbure $\rho$ de la face 11 de la lentille située en regard de la pièce sphérique 10, afin de rendre stationnaires les variations de l'angle d'incidence $\gamma$du faisceau sur la caustique FG, de part et d'autre du point moyen H. Par rotation autour de OY, on en déduit que la face 11 peur être approchée par une surface torique.

Si l'on considère, avec les notations qui ont été définies précédemment, que la lentille est taillée dans du plexiglass, que le milieu de couplage est de l'eau et que la pièce est enacier, on a:

— $C_2$=2730 m/s;
— $C_2$=1483 m/s;
— $C_3$=3230 m/s.

Si d'autre part, la sphère présente un rayon R=4,8 mm et si l'angle d'incidence $\gamma$=15°, si p=0,3 mm, d=0,6 mm et h=20 mm, il est possible de déduire que:

— r=64,9°;
— $\theta$=10,1°;
— i=24,6°;
— $\omega$=34,7°;
— $\alpha$=63,9°;
— a=12,2 mm;
— b=21,2 mm;
— $\rho$=15,2 mm;

et, pour les rayons extrêmes 12 et 13 du faisceau, les angles de réfraction suivants:

— $r_1$=75°;
— $r_2$=57,7°.

Enfin, on en déduit également la largeur minimale que doit présenter le faisceau incident sur la face 14 de la lentille:

— D=2,3 mm.

En référence à la figure 5, on a représenté une lentille 9, correspondant à l'optique précédente. Cette lentille 9 présente une face plane d'entrée 14 du faisceau incident, tandis que sa face 11 en regard de la pièce, est une surface correspondant à l'intersection d'un tore 15 avec le cylindre dans lequel est taillée la lentille 9. Le faisceau ultrasonore, par exemple, quie parvient à la lentille, est perpendiculare à la face 14 et parallèle à la caustique FG de la lentille dans la pièce.

Les optiques et lentilles qui viennent d'être décrites dans le cas de pièces massives s'appliquent bien entendu à des pièces non massives. Cependant, lorsqu'il s'agit de pièces délimitées par deux surfaces parallèles, il peut être avantageux d'obtenir la caustique FG après réflexion du faisceau sur la face de la pièce opposée à la face d'entrée du faisceau dans la pièce. Dans le cas d'une plaque par exemple, il suffit de remplacer, dans la description donnée à propos de la pièce plane représentée sur la figure 2, le point H par son image dans le miroir plan constitué par la face de la plaque, opposée à la face d'entrée du faisceau dans la pièce. Les calculs qui définissent la surface conique permettant l'exploration de la plaque, sont identiques à ceux qui ont été effectués à propos de la figure 2. Dans ces calculs, il suffit de remplacer la profondeur moyenne p du segment FG par (2e—p); $e$ désigne ici l'épaisseur de la plaque. Il résulte de ces observations, que l'exemple numérique donné à propos de la figure 2, correspond au contrôle d'une plaque d'épaisseur égale à 4,6 mm.

En référence à la figure 6a, on a représenté une lentille 9, permettant l'exploration d'un segment FG correspondent à la caustique de la lentille dans la sphère creuse 16. Cette sphère creuse de centre O a une épaisseur $e$ et un rayon extérieur R.

Sur la figure 6b, on a montré une vue agrandie de la portion de sphère creuse sur laquelle arrive le faisceau en provenance de la lentille.

— on désigne par $\theta$ l'angle que fait la normale OY à la sphère, passant par la caustique FG, avec la normale à la sphère au point M d'incidence du rayon moyen AM du faisceau sur la face externe de la sphère;
— on désigne par $\varepsilon$ l'angle que fait la normale OY à la sphère passant par la caustique FG, avec la normale à la sphère au point k de réflexion du rayon moyen MK sur la face interne de la sphère;
— on désigne par $\varphi$ l'angle d'incidence du faisceau réfracté MK sur la face interne de la sphère.

Il est alors possible d'écrire la relation:

$$r+\theta-\varepsilon=(\pi/2)-\gamma+\varepsilon=\varphi$$

A partir de cette relation et par des calculs semblables à ceux qui ont été effectués à

propos de la figure 4, on en déduit tous les paramètres nécessaires à la détermination de la surface torique 17 de la lentille 9.

Selon un exemple de réalisation particulier, si l'on choisit l'épaisseur de la sphère e=0,6 mm, et l'angle $\gamma$=45°, en conservant le rayon R=4,8 mm, la profondeur moyenne p=0,3 mm, la longueur de la caustique égale à l'épaisseur d=0,6 mm et la hauteur d'eau moyenne h=20 mm, $C_1$, $C_2$ et $C_3$ comme pour l'exemple correspondant à la figure 4, on en déduit que:

| | |
|---|---|
| — r=41,5°; | — a=10,9 mm |
| — $\varphi$=49,3°; | — b=22,1 mm |
| — $\varepsilon$=4,3°; | — $\rho$=13,7 mm |
| — $\theta$=12°; | — $r_1$=45° |
| — i=17,7°; | — $r_2$=38,2° |
| — $\omega$=29,7°; | — $\varphi_1$=53,9° |
| — $\alpha$=56,7°; | — $\varphi_2$=45° |
| | — D=3,4 mm. |

En référence à la figure 7, on a représenté une lentille permettant l'exploration d'une pièce cylindrique 18, de manière que la caustique FG de cette optique, soit située sur une normal OY à la surface de cette pièce cylindrique. On suppose sur cette figure que la pièce cylindrique 18 est représentée sur la gauche de la normal OY, selon une section méridienne, tandis qu'elle est représentée sur la droite de cette normale selon une section équatoriale. En fait, cette section equatoriale est représentée sur la figure par un rabattement de 90° qui amène la section équatoriale de la pièce cylindrique dans le plan de la figure. Cette représentation a été adoptée ici de manière à faciliter la représentation des sections méridienne et équatoriale du faisceau issu de la lentille 19. La section méridienne de la pièce contenant la caustique FG coupe la lentille 19, selon un segment de droite dont la position est calculée comme indiqué à propos de la figure 2. La lentille 19 présente donc une surface conique 21, en regard de la pièce cylindrique 18 dans la section méridienne contenant la caustique. La section équatoriale de la pièce, qui contient FG coupe la lentille 19 selon un arc de cercle défini comme celui de la figure 4. La surface 22 de cette lentille en regard du cylindre 18 dans la section équatoriale contenant la caustique, a une forme torique. La lentille 19 doit donc présenter une surface conique en regard de la pièce cylindrique 18, au voisinage du plan méridien de cette pièce contenant la caustique, et une surface torique, au voisinage du plan équatorial de cette pièce contenant la caustique; des deux surfaces ont le même axe de révolution YY' et sont raccordées de manière continue et monotone; la forme de la surface résultante sera mieux représentée à la figure 8. Les hauteurs d'eau he et hm sont évidemment reliées par l'égalité des chemins acoustiques

$$(P_mA_mM_mH)=(P_eA_eM_eH)$$

A titre d'exemple, si la lentille est réalisée en plexiglass, si le milieu de couplage est de l'eau et que la pièce à explorer est en acier, on a:

— $C_1$=2730 m/s;
— $C_2$=1483 m/s;
— $C_3$=3230 m/s.

D'autre part, si l'on choisit $\gamma$=45°, pour l'observation sans réflexion intermédiaire, d'un pièce cylindrique creuse d'épaisseur e=9,5 mm, de rayon extérieur R=54,4 mm, si la profondeur d'observation p=4,75 mm, c'est-à-dire correspondant à la mi-épaisseur, et si la longueur d de la caustique est égale à l'épaisseur e, c'est-à-dire 9,5 mm, si on choisit enfin pour la partie torique 22 de la lentille: he (hauteur d'eau he dans le plan équatorial)=20 mm, cette hauteur d'eau étant la distance qui sépare les points Ae et Me dans le plan équatorial. Le point Ae est le point d'émergence du rayon moyen PeAe du faisceau ultrasonore. Le point Me est le point où le rayon moyen atteint la pièce cylindrique.

Pour la partie conique 21 de la lentille, l'angle de réfraction $r_m$ dans le plan méridien est égal à 45°, l'angle d'incidence dans le plan méridien $i_m$=18,94° et l'angle $\alpha_m$ dans le plan méridien est égal à 38,88°.

On a désigné par $P_m$, $A_m$, $M_m$ le rayon moyen du faisceau ultrasonore qui traverse la lentille 19 et qui atteint le cylindre au point $M_m$ dans le plan méridien.

Par des calculs comparables à ceux qui ont été indiqués à propos de la figure 4, on obtient pour la partie torique 22 de la lentille:

— angle $r_e$ de réfraction dans le plan équatorial:
  . $r_e$=40,20°;
— angle $\theta$=4,80°;
— angle d'incidence $i_e$ dans le plan équatorial:
  . $i_e$=17,24°;
— angle $\omega$=22,04°;
— angle $\alpha_e$ dans le plan équatorial:
  . $\alpha$e=44,36°.

Dans ces conditions, l'égalité des chemins acoustiques donne la hauteur d'eau moyenne $h_m$ dans le plan méridien, soit $h_m$=20,38 mm.

La position du point moyen $A_m$ pour la partie conique 21 de la lentille est alors définie par les coordonnées $a_m$=11,37 mm et $b_m$=19,28 mm.

De la même manière, la position du point moyen $A_e$, pour la partie torique 22 de cette lentille est définie par les coordonnées $a_e$=12,07 mm, $b_e$=72,85 mm (à noter que les ordonnées b sont décalées de R=54,5 mm entre les sections équatoriale et méridienne).

Le rayon de courbure $\rho$ de la partie torque de la lentille est alors égal à 61,46 mm.

En référence à la figure 8, on a présenté une lentille 23, sont la face 24 en regard de la pièce cylindrique est constituée par une surface torque 25, raccordée de manière continue et monotone à une surface conique 26; cette

lentille permet l'exploration d'une pièce cylindrique telle que décrite à la figure 7. Il n'y a pas de discontinuité au raccordement 27, des surfaces 25 et 26.

En référence à la figure 9, on a représenté une optique 28 conforme à l'invention et permettant l'exploration d'une pièce plane 29, selon une caustique FG qui est normale à la surface de cette pièce. Cette optique est constituée par deux miroirs coaxiaux avec la caustique FG. L'un de ces miroirs 30 a une forme conique alors que l'autre miroir 31 a une forme qui dépend de la pièce à examiner. Dans l'exemple de réalisation décrit, le miroir 31 a une forme cylindrique. L'axe Y'Y du traducteur qui émet le faisceau ultrasonore par exemple, pour l'exploration de la pièce 29, est alors dans le prolongement de la caustique FG; l'ouverture entre les plans d'incidence extrêmes du faisceau peut alors atteindre 360°. On peut en particulier consacrer 180° à l'émission et 180° à la réception.

Le principe du calcul de ces miroirs est le même que celui qui a été effectué à propos de la figure 2. Ces deux miroirs peuvent être, de manière avantageuse, usinés dans un même bloc en aluminium par exemple; l'exploration peut alors s'effectuer par contact direct avec la pièce 29.

Si S désigne le demi-angle au sommet du miroir conique 30, on peut écrire:

$$S=\frac{i}{2}$$

et dans le cas de l'observation d'une pièce plane en acier par exemple, à l'aide d'une optique constituée en aluminium, on définit les paramètres suivants:

— $C_2$=6300 m/s (vitesse des ultrasons dans l'aluminium);
— $C_3$=5900 m/s (vitesse des ondes longitudinales dans l'acier).

Si l'on choisit $\gamma$=30°, on obtient les angles suivants:

— r=60°;
— i=67,6°;
— s=33,8°.

On notera que dans les différents modes de réalisation de l'optique conformes à l'invention, on a utilisé un faisceau d'ultrasons, mais il est bien évident que ce faisceau aurait pu être de type électromagnétique.

Comme on l'a vu également, les différents modes de réalisation du procédé selon l'invention permettent l'exploration, soit de pièces massives, soit de pièces présentant des faces parallèles telles que des lames, des tubes, des sphéres creuses.

Enfin, les différents procédés qui viennent d'être décrits peuvent permettre dans le cas où l'on utilise un faisceau ultrasonore, un diagnostic médical. En effet, de telles lentilles parcourues par un faisceau ultrasonore et qui présentent une caustique perpendiculaire à la surface du corps à explorer, peuvent permettre de déterminer, par exemple, des différences de densité dans un organe du corps humain, dans un plan perpendiculaire à la surface de cet organe.

Il est bien évident que dans les différents modes de réalisation qui viennent d'être décrits, les différents moyens auraient pu être remplacés par des moyens équivalents, sans sortir du cadre de l'invention.

**Revendications**

1. Procédé pour l'exploration d'une pièce par un faisceau, cette pièce n'étant une partie ni du corps humain ni du corps animal, le procédé consistant à utiliser une lentille (1) dont une face plane reçoit le faisceau (3), caractérisé en ce que cette face plane est perpendiculaire à la caustique (FG) de la lentille dans la pièce (2), cette caustique étant obtenue par réfraction du faisceau issu de la lentille dans la pièce et étant concentrée sur une normale (YY') à la pièce, une autre face de la lentille située en regard de la pièce (2) étant une surface gauche présentant le même axe (Y'Y) que celui de la caustique (FG).

2. Procédé selon la revendication 1, caractérisé en ce que la pièce étant plane, la face de la lentille en regard de la pièce est une surface conique (7).

3. Procédé selon la revendication 1, caractérisé en ce que la pièce étant sphérique, la face (11) de la lentille en regard de la pièce, a une forme torique.

4. Procédé selon la revendication 1, caractérisé en ce que la surface de la pièce étant cylindrique, la face de la lentille en regard de la piéce présente une surface conique (26) au voisinage du plan méridien de cette pièce contenant la caustique et une surface torique (25) au voisinage du plan équatorial de cette pièce contenant la caustique, ces deux surfaces étant raccordées de manière continue et monotone.

5. Procédé selon la revendication 1, caractérisé en ce que la caustique est formée après au moins une réflexion du faisceau dans la pièce à la suite de la réfraction.

**Patentansprüche**

1. Verfahren zur Untersuchung eines Teiles mit einem Strahlenbündel, wobei dieses Teil weder ein Teil des Körpers eines Menschen noch des Körpers eines Tieres ist und das Verfahren darin besteht, eine Linse (1) zu verwenden, von der eine ebene Seite das Strahlenbündel (3) empfängt, dadurch gekennzeichnet, daß diese ebene Seite senkrecht zu der Kaustik (FG) der Linse in dem Teil (2) verläuft, wobei diese Kaustik durch Brechung des von der Linse ausgehenden Strahlenbündels in dem Teil erhalten und auf eine normale (YY') auf dem Teil konzentriert wird, und daß eine andere Steit der Linse, welche dem Teil (2) gegenüberliegend angeordnet ist, eine schräg verlaufende Oberfläche ist, die die gleiche Achse (Y'Y) wie die Kaustik (FG) aufweist.

2. Verfahren nach Anspruch 1, dadurch gekennziechnet, daß das Teil eben ist und daß die dem Teil gegenüberliegende Seite der Linse eine konische Oberfläche (7) ist.

3. Verfahren nach Anspruch 1, dadurch gekennzeichnet, daß das Teil sphärisch ist und daß die dem Teil gegenüberliegende Seite (11) der Linse eine torische Form aufweist.

4. Verfahren nach Anspruch 1, dadurch gekennzeichnet, daß die Oberfläche des Teils zylinderförmig ist, daß die dem Teil gegenüberliegende Seite der Linse eine konische Oberfläche (26) in der Nähe der Meridianebene dieses Teils ist, die die Kaustik enthält und eine torische Oberfläche (25) in der Nähe der Äquatorialebene dieses Teils aufweist, die die Kaustik enthält, und daß diese zwei Oberflächen auf kontinuierliche und monotone Weise miteinander verbunden sind.

5. Verfahren nach Anspruch 1, dadurch gekennzeichnet, daß die Kaustik nach wenigstens einer Reflexion des Strahlenbündels in dem Teil anschließend an die Brechung gebildet wird.

**Claims**

1. Process for the investigation of an article by means of a beam, said article not being a portion of a human or animal body, the process involving the use of a lens (1), a planar face of which receives the beam (3), characterized in that the planar face is perpendicular to the caustic (FG) of the lens in the article (2), said caustic being obtained by refraction in the article of the beam issuing from the lens and being concentrated on a normal (YY') to the article, another face of the lens, located facing the article (2), being a portion of a surface of revolution about the same axis (Y'Y) as that of the caustic (FG).

2. Process according to Claim 1 characterized in that the article is flat, and the face of the lens facing the article is a conic surface.

3. Process according to Claim 1 characterized in that the article is spherical, and the face of the lens facing the article has a toric form.

4. Process according to Claim 1 characterized in that the surface of the article is cylindrical, and the face of the lens facing the article has a conic surface (26) near the meridian plane of the article containing the caustic, and a toric surface (25) near the equatorial plane of the article containing the caustic, said two surfaces being joined in a continuous and regular manner.

5. Process according to Claim 1 characterized in that the caustic is formed after at least one reflection of the beam in the article following the refraction.

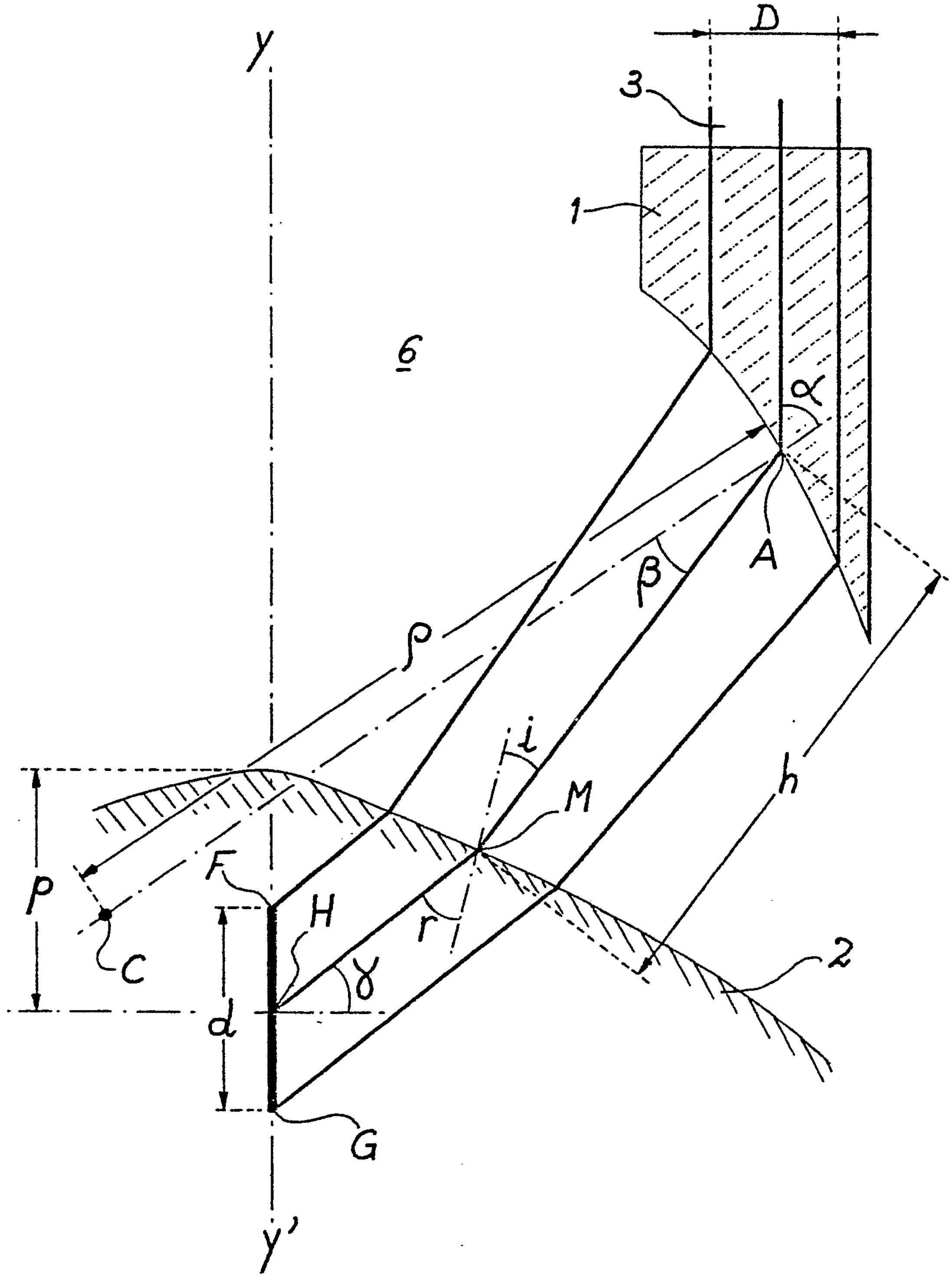


FIG. 1

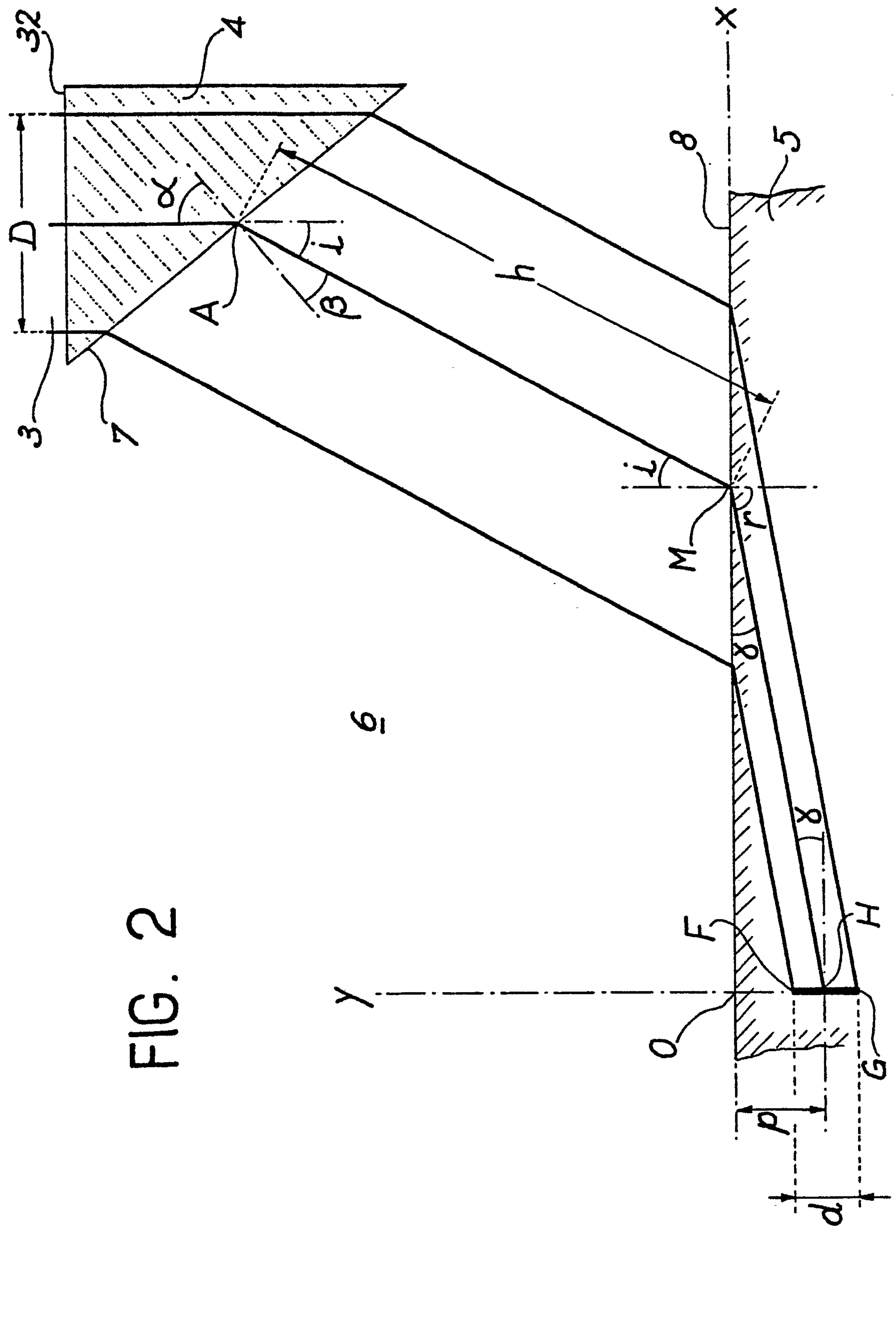


FIG. 2

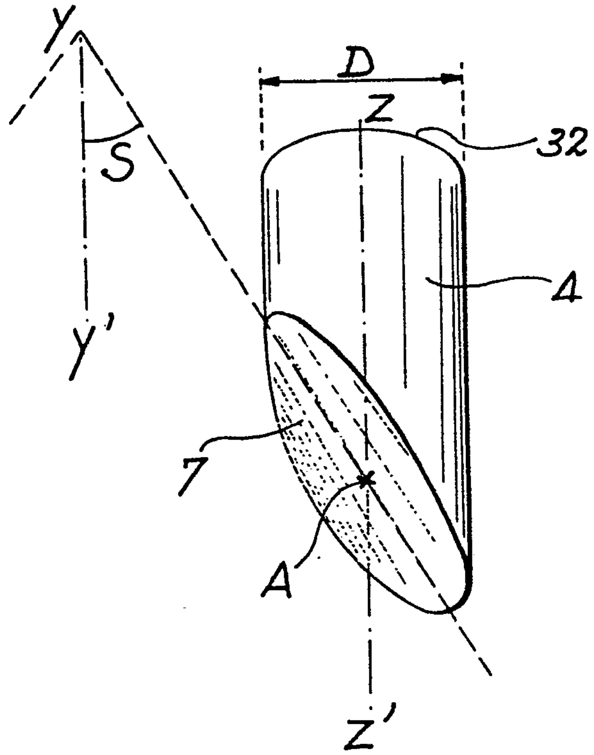


FIG. 3

FIG. 5

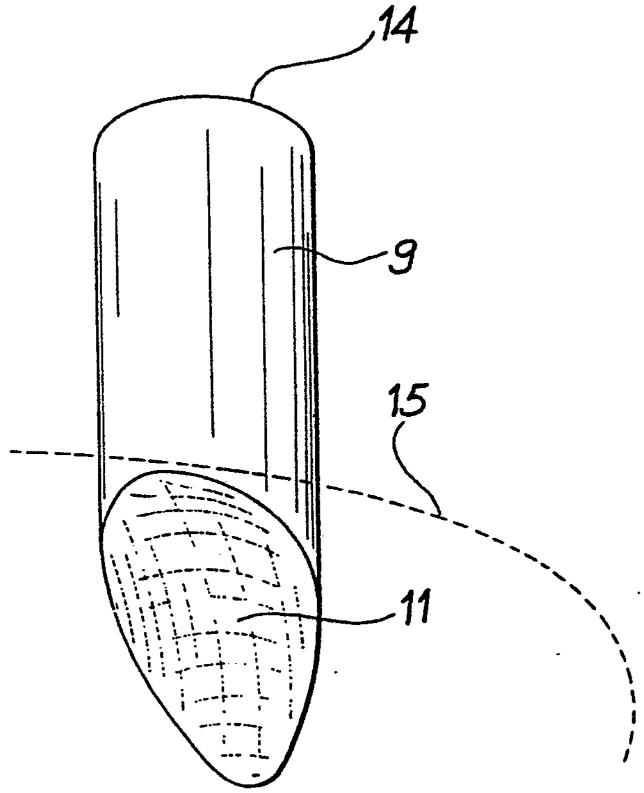


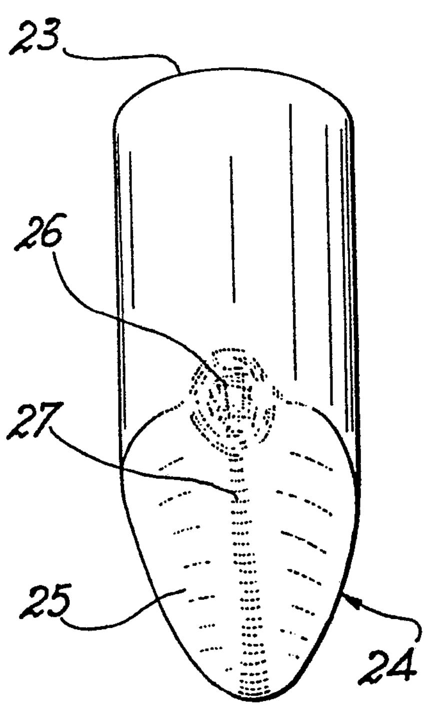


FIG. 8

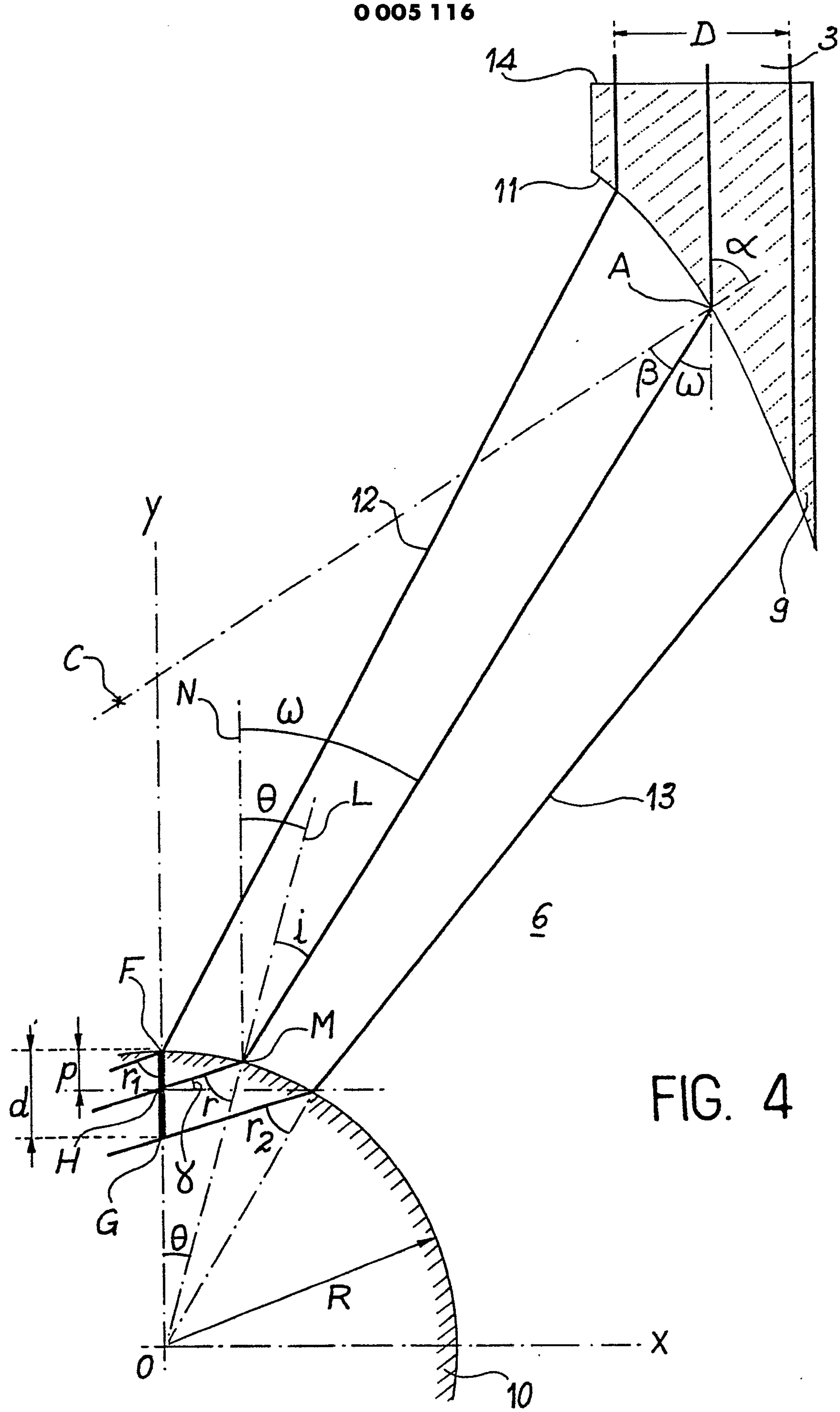


FIG. 4

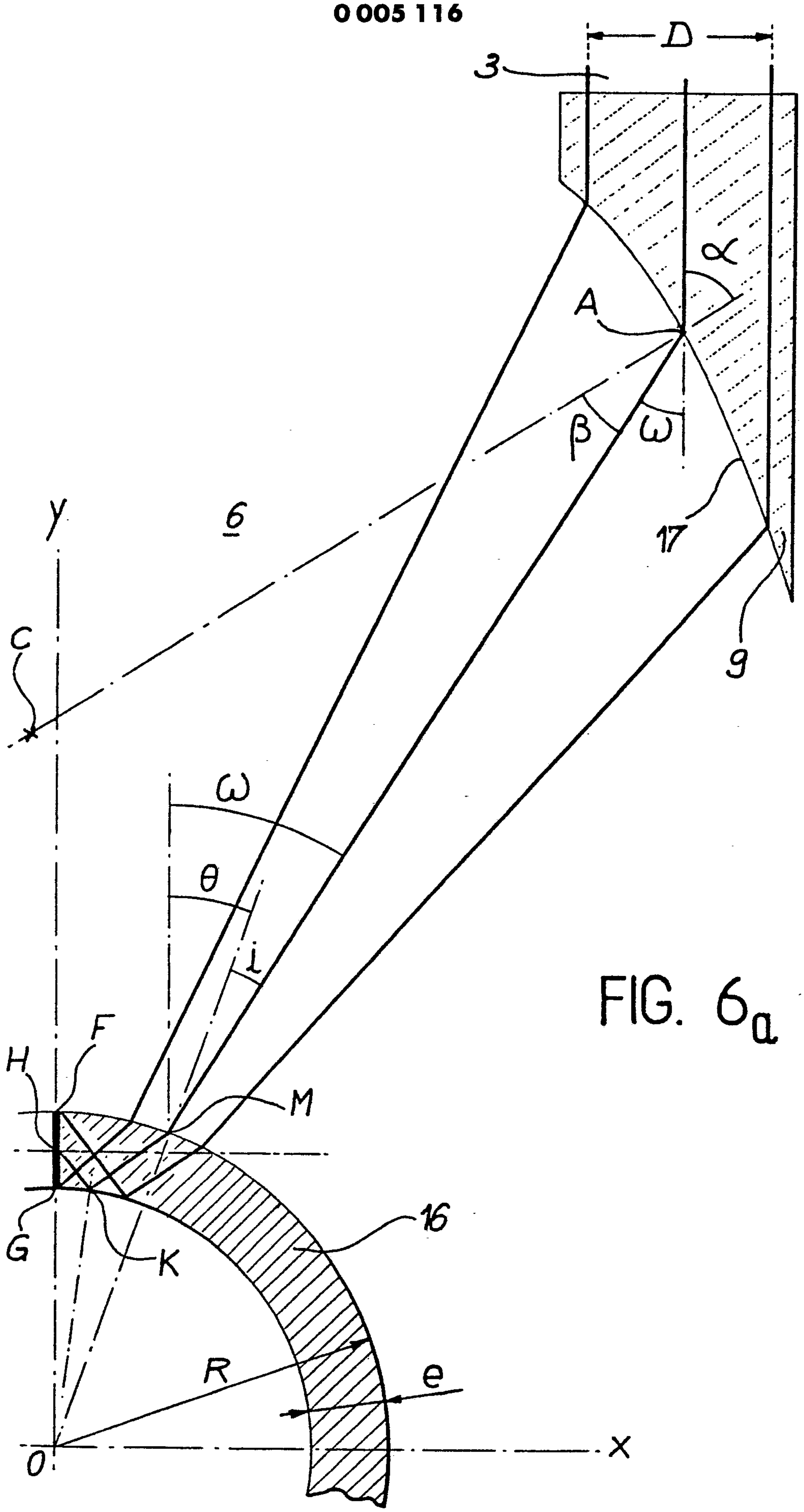


FIG. 6a

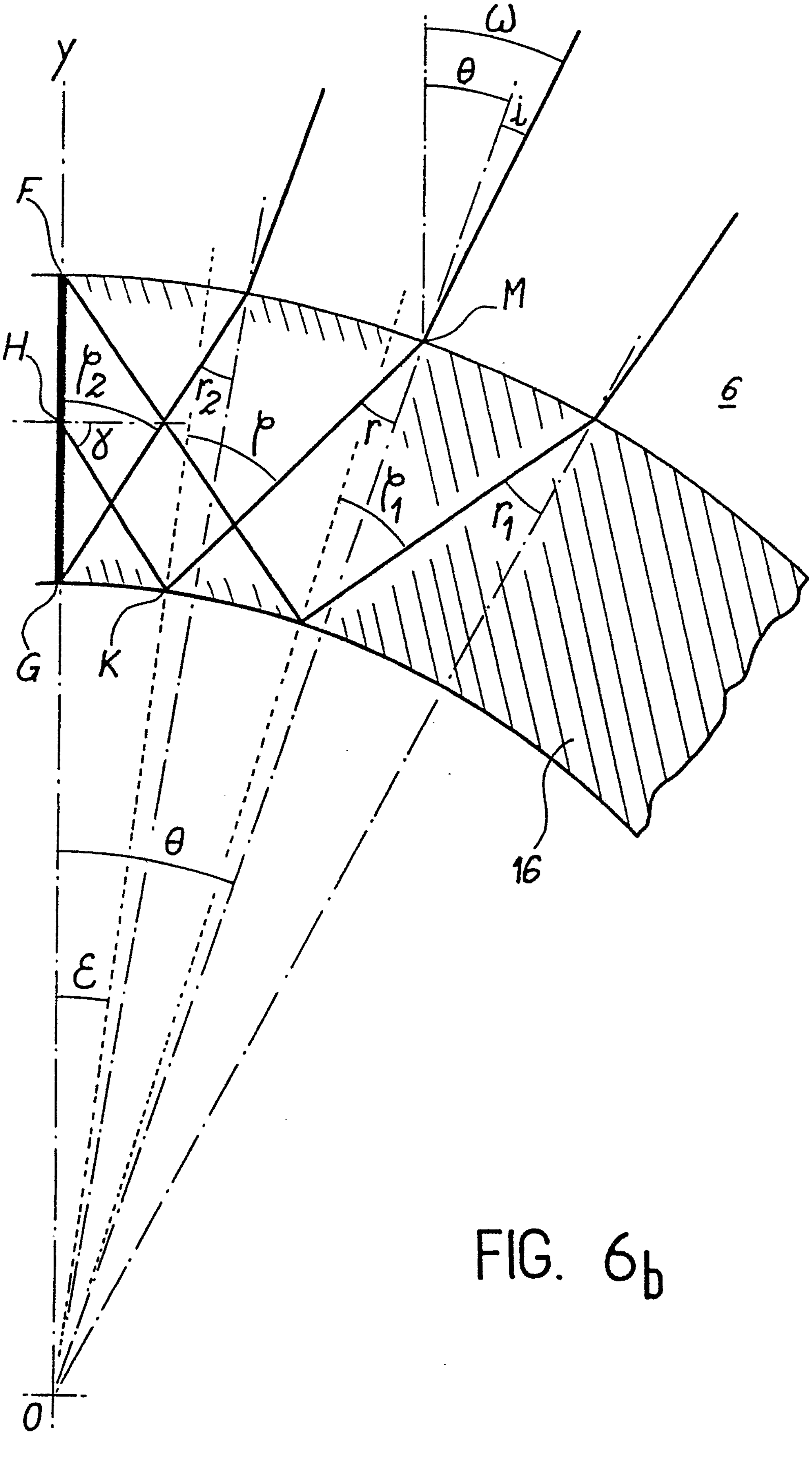


FIG. 6b

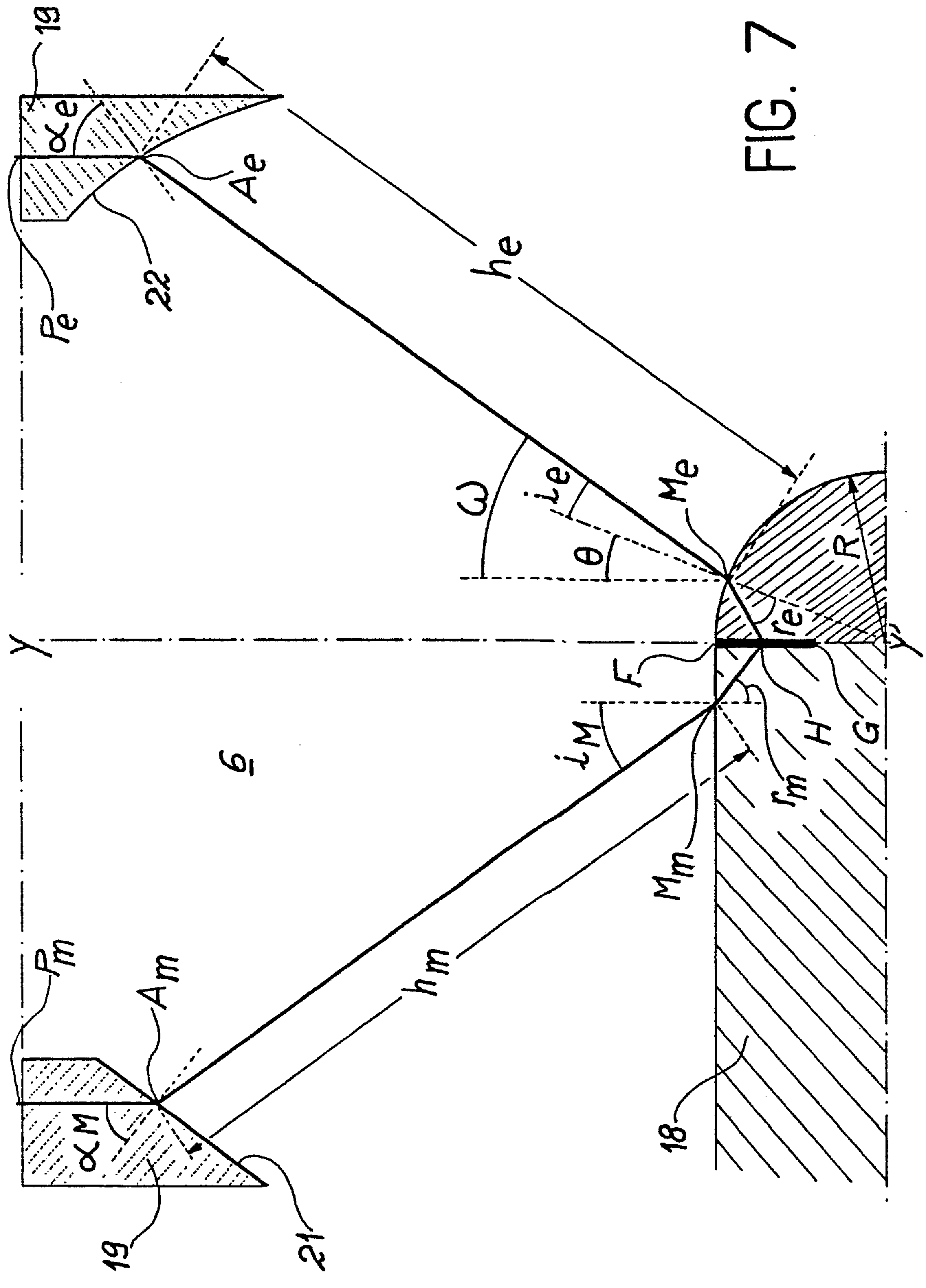


FIG. 7

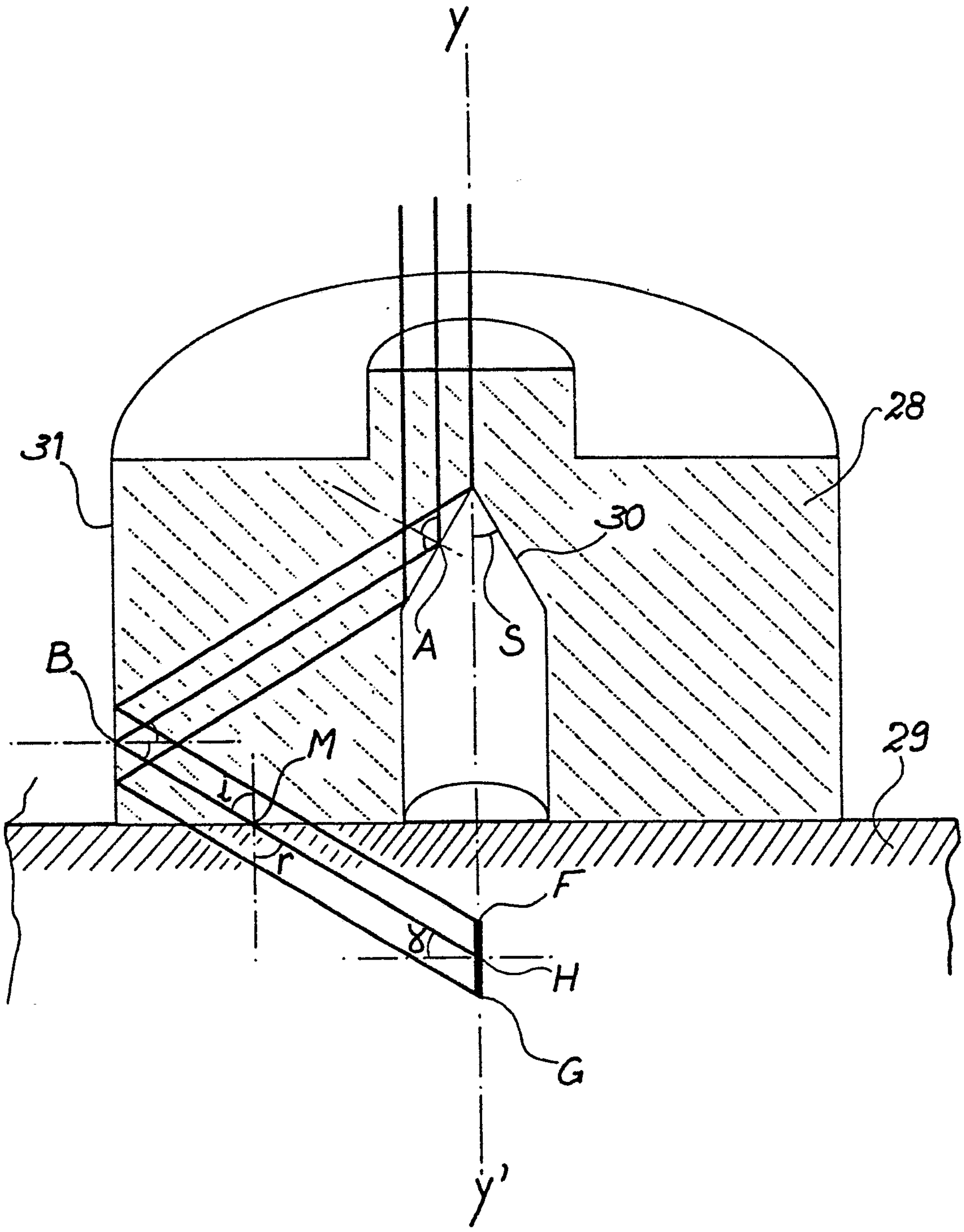


FIG. 9